# EUROPEAN PATENT APPLICATION

(11) **EP 2 296 357 A1**
(43) Date of publication of application: **16.03.2011**
(21) Application number: 09425352.3
(22) Date of filing: 11.09.2009
(51) Int. Cl.: H04M 1/64

(54) **Multiple message answer machine with ID recognition**

(71) Applicant: Unione Consulenti Srl, 20122 Milano (IT)
(72) Inventor: Nocco, Alessandro, 20090 Opera (MI) (IT)

(57) **Abstract**

The multiple message answer machine with ID recognition allow the user to connect a single phone number of an incoming calling with a specific prerecorded vocal message. This is obtained by a device that can recognize the phone number of an incoming calling and by a processing unit able to match a list of prerecorded phone number (Contact List) with a set of prerecorded vocal message (Message List).

## Description

### STATE OF THE ART

Use of answer machines is widespread since long time and is characterized by the fact that they are used by different kind of consumers, starting with the families ending with the big companies, including a great variety of associations. According with the variety of the consumers, a great amount of innovations and new solutions have been developed to match particular needs and demands of the market. By the time these innovations have been added to the original idea that is always the same: to answer an incoming phone call by a prerecorded message. For example, among successful and popular innovations we can mention the one that give the possibility to set the number of phone rings, the one that give the possibility to change answer machine settings by a phone call, and the innovation for which one of multiple messages is triggered by a sequence of code keys pressed by the caller. Therefore we can mention the well-know integrations with internet and mobile communications (for example an e-mail or a sms to notify that a caller has left a message).

Although the numbers of new solutions and innovations, answer machines are still characterized by the fact that the message the callers used to receive is generic. Messages that can be appropriate for strangers and general callers may be not appropriate for specific callers. Even the innovation for which a specific message is macthed with a specific phone lines (PBX, private branch exchange) can't provide a satisfactory solution.

### DESCRIPTION

The multiple message answer machine with ID recognition give the possibility to match a specific message to a specific caller. The system consists of three elements.
1) A device able to identify the phone number.
2) A mass storage unit
3) A processing unit able to record, manage and match phone number and vocal messages.

1) The machine is based on the possibility to recognise the phone number of an incoming calling.
2) On a mass storage unit (for example magnetic media or semiconductor memory) the user can store a list of phone number (Contact List) and a list of vocal messages (Message List). Every vocal messages is identified by a code (a word, an acronym, a number or a single type).
3) The last step is to match every prerecorded phone number with a single prerecorded vocal message. An LCD display helps the users in setting and changing the corrispondence between phone number and vocal message. It means that a specific vocal message can be reserved to a specific phone number.

According to user preferences phone numbers that are not recognised as prerecorded phone number can be match with a generic vocal message. Alternatively they can be managed with no vocal message. The same happens for phone numbers storaged in the system without a corrispondence with a prerecorded vocal message. The processing unit can match a single phone number with a single vocal message, but, according to user preferences, is able to match a group of phone number with a single vocal message.

### DESCRIPTION OF DRAWINGS

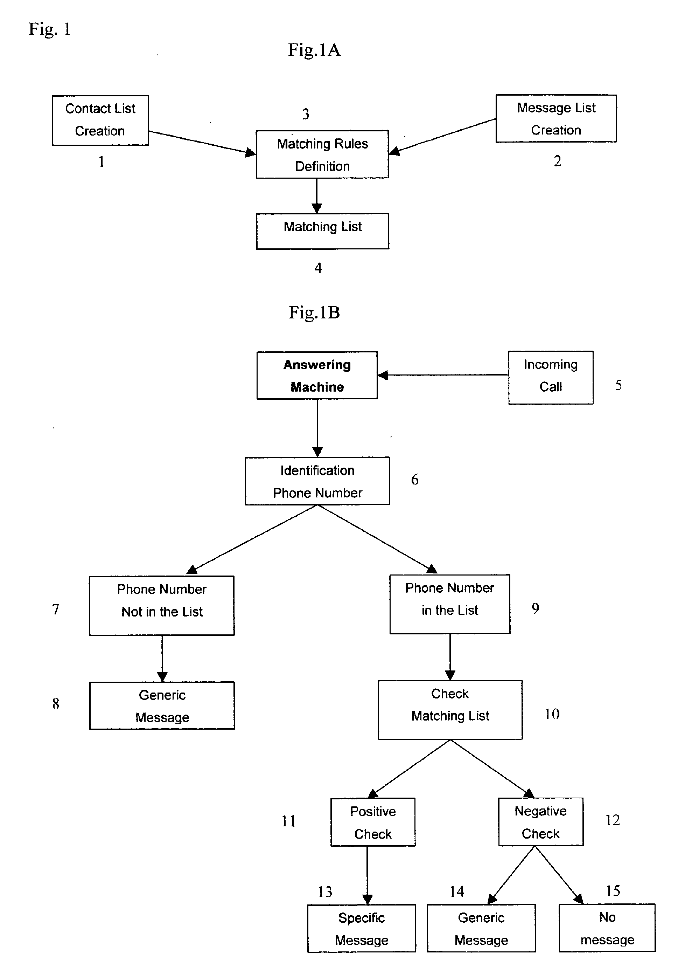

**Fig.1A****:** The user creates and records on the mass storage unit a list of phone numbers (Contact List Creation 1) and a list of vocal messages (List of Messages Creation 2). According to his preferences the user connects one of more phone number with a single vocal message (Matching Rules Definition 3). At this point the system has created a Matching List 4, and the system is ready to operate.
**Fig. 1B****:** The Answering Machine receives an Incoming Calling 5, the machine operates the identification of the phone number (Identification Phone Number 6). If the phone number is not present in the contact list (Phone Number Not in the List 7) the system matches the incoming call to a Generic Message 8. If the phone number is present in the contact list (Phone Number in the List 9) the machine checks if the phone number is present in the matching list (Check Matching List 10). The Positive Check 11 involves a Specific Message 13, the Negative Check 12 involves a Generic Message 14 or No Message 15.

## Claims

1. The innovation of the multiple message answer machine with ID recognition is **characterized by the fact that** the machine give the possibility to match a single phone number of an incoming calling to a specific prerecorded vocal message, according to user preferences.
